Europäisches Patentamt

European Patent Office

Office européen des brevets

(11) Numéro de publication: **0 192 506**
**B1**

(12) **FASCICULE DE BREVET EUROPEEN**

(45) Date de publication du fascicule du brevet: **04.04.90**

(21) Numéro de dépôt: **86400088.0**

(22) Date de dépôt: **17.01.86**

(51) Int. Cl.⁵: **F 24 H 1/20**

(54) **Appareil de réchauffage d'un fluide, notamment accumulateur d'eau chaude sanitaire.**

(30) Priorité: **21.01.85 FR 8500803**

(43) Date de publication de la demande:
**27.08.86 Bulletin 86/35**

(45) Mention de la délivrance du brevet:
**04.04.90 Bulletin 90/14**

(84) Etats contractants désignés:
**AT BE CH DE GB IT LI LU NL SE**

�}Documents cités:
**EP-A-0 108 525**
**DE-A-2 719 171**
**FR-A-2 479 956**

(73) Titulaire: **GAZ DE FRANCE**
**23, rue Philibert Delorme**
**F-75017 Paris (FR)**
㊴ **BE CH DE GB IT LI LU NL SE AT**

(73) Titulaire: **SOCIETE INDUSTRIELLE AUER**
**Tour Essor 93 14, 16 Rue Scandicci**
**F-93508 Pantin Cedex (FR)**
㊴ **BE DE GB IT NL**

(72) Inventeur: **Henault, Jean-Paul**
**2 rue de la Ferme**
**F-80130 Bourseville (FR)**
Inventeur: **Drapier, Albert**
**21 Avenue H. Martin**
**F-94100 Saint-Maur (FR)**
Inventeur: **Grochowski, Guy**
**38 Avenue de la Division Leclerc**
**F-95170 Deuil la Barre (FR)**
Inventeur: **Meslif, Alain**
**13 Allée des Mésanges**
**St Martin du Tertre F-95270 Luzarches (FR)**

(74) Mandataire: **Thévenet, Jean-Bruno et al**
**Cabinet BEAU DE LOMENIE 55 rue d'Amsterdam**
**F-75008 Paris (FR)**

Courier Press, Leamington Spa, England.

## Description

La présente invention a pour objet un appareil de réchauffage de fluide, comprenant un circuit de circulation forcée de produits de combustion et un circuit de circulation naturelle ou forcée d'un fluide à réchauffer.

L'invention concerne plus particulièrement un appareil de réchauffage d'un fluide, notamment accumulateur d'eau chaude sanitaire, comprenant une enceinte de chauffage alimentée à sa partie inférieure en fluide à réchauffer, une chambre de combustion comportant un brûleur à l'une de ses extrémités et se prolongeant du côté opposé au brûleur à l'intérieur de l'enceinte, un tube de circulation de fumées disposé en hélice à l'intérieur de l'enceinte pour constituer un échangeur de chaleur à contre-courant, lequel tube est raccordé de façon étanche à la sortie de la chambre de combustion et débouche dans un dispositif d'évacuation de fumées situé à la partie inférieure de l'enceinte pour évacuer les fumées à l'extérieur de l'appareil de réchauffage, et des moyens de prélèvement du fluide réchauffé à la partie supérieure de l'enceinte.

On connait, notamment par le document FR-A-2 479 956, des appareils de réchauffage d'un liquide de ce genre qui comportent, à l'intérieur d'une enceinte de chauffage parcourue par le liquide à réchauffer, une chambre de combustion tubulaire débouchant dans un tube de fumée constitué par un serpentin enroulé en hélice, en spires descendantes autour de la chambre de combustion pour créer un échange de chaleur entre le liquide à réchauffer présent dans l'enceinte et les fumées qui circulent à l'intérieur du serpentin immergé à l'intérieur de l'enceinte. Dans un tel type d'appareil de chauffage à gaz, les fumées produites dans la chambre de combustion au niveau du brûleur sont introduites dans le tube de fumées en forme de serpentin à la partie supérieure de celui-ci qui est voisine de la partie supérieure de l'enceinte, et circulent vers le bas à contre-courant par rapport au mouvement ascendant du liquide qui se réchauffe dans l'enceinte. Cette disposition permet d'obtenir un assez bon rendement qui peut être accru par la récupération de la chaleur latente de vaporisation de la vapeur d'eau produite par la combustion. Toutefois, le rendement de ces appareils n'est pas encore optimal.

De plus, les appareils de réchauffage connus de ce type utilisent des échangeurs de chaleur constitués par des tubes lisses rigides en acier qui occupent la majeure partie de l'espace libre situé à l'intérieur de l'enceinte de réchauffage remplie de liquide et exigent des opérations de formage relativement longues et délicates pour conduire à la forme d'un serpentin.

On connait par ailleurs par le document EP-A-0108525 un échangeur de chaleur pour échanger de la chaleur entre deux fluides, lequel échangeur de chaleur comprend à l'intérieur d'une enceinte un tube annelé qui présente ainsi à la fois une certaine souplesse et une surface d'échange accrue et peut être enroulé en hélice avec ses différentes spires en contact les unes avec les autres. Un tel échangeur de chaleur conserve toutefois une souplesse après sa mise en place et nécessite des moyens de retenue, ce qui conduit à disposer l'échangeur de chaleur à l'intérieur d'une gaine tubulaire rigide ou dans l'ensemble du volume disponible à l'intérieur de l'enceinte et à maintenir dans ce cas les spires en position à l'aide de deux parois cylindriques rigides coaxiales ne ménageant entre elles qu'un espace correspondant à la section du tube annelé. Un tel échangeur de chaleur se trouve ainsi inadapté à une mise en place dans un appareil de réchauffage d'un grand volume de fluide.

Un but de la présente invention est d'améliorer le coefficient d'échange, la surface d'échange par mètre linéaire de tube, et de ce fait, le rendement des appareils de réchauffage de fluide connus.

Un autre but de l'invention est d'assurer une bonne homogénéisation de la température du fluide réchauffé et d'augmenter la capacité de fluide réchauffé soutirable à une température fixée par la consigne de régulation.

Encore un autre but de l'invention est de faciliter et rendre plus rapide et moins coûteuse la mise en place d'un échangeur de chaleur à l'intérieur de l'enceinte d'un appareil de réchauffage de fluide à accumulation et à condensation.

Ces buts sont atteints grâce à un appareil de réchauffage de fluide, du type mentionné en tête de la description, qui, conformément à l'invention, est caractérisé en ce que le tube échangeur de chaleur est constitué par un tube métallique annelé étanche originellement souple enroulé en hélice autour d'un support rigide et définissant une série de boucles ou spires jointives, ledit tube métallique annelé étant rigidifié dans cette configuration, en ce que le tube annelé est disposé sensiblement dans le tiers inférieur de l'enceinte, ledit support rigide étant ouvert à sa partie supérieure et à sa partie inférieure et constitué par une surface cylindrique entourant la partie de la chambre de combustion située à l'intérieur de l'enceinte, et en ce que les différentes spires du tube annelé sont tangentiellement en contact les unes avec les autres pour former un échangeur compact.

Le tube annelé étanche originellement souple est rigidifié par gonflage après avoir été enroulé en hélice.

Le tube annelé est fixé par soudage d'une part sur la chambre de combustion à la partie supérieure de l'échangeur, d'autre part sur le carter du dispositif évacuateur de fumée, à la partie inférieure de l'échangeur.

D'une manière générale, l'échangeur de chaleur est du type hélicoïdal à contre-courant, le fluide situé dans l'enceinte échangeant de la chaleur par convection naturelle, et l'échangeur est situé dans une zone de température du fluide à réchauffer très largement inférieure à la température de rosée des produits de combustion.

Selon un mode de réalisation particulier, adapté à un accumulateur de liquide de volume de 80 litres environ, pour l'obtention de liquide à une température voisine de 65°C, l'échangeur de chaleur comprend un tube annelé présentant une longueur comprise entre environ 2 et 4 m, un diamètre moyen compris entre environ 30 et 50 mm, une profondeur de cannelure de l'ordre de 5 mm, et un diamètre de spire de l'ordre de 25 à 35 cm.

Un appareil de réchauffage d'eau chaude sanitaire selon l'invention, permet notamment d'obtenir en sortie des fumées à une température de l'ordre de 19 ou 20°C si l'eau froide introduite à la partie inférieure de l'enceinte est à une température d'environ 15°C. De la sorte, on limite la formation d'un panache de vapeur à la sortie du conduit de fumées.

D'autres caractéristiques et avantages de l'invention ressortiront de la description suivante d'un mode particulier de réalisation, en référence aux dessins annexés, sur lesquels:

la figure 1 est une vue schématique en coupe axiale d'un appareil de réchauffage selon l'invention,

la figure 2 est une vue de côté de l'extrémité de sortie de l'échangeur de chaleur utilisé dans l'appareil de la figure 1,

la figure 3 est une vue schématique en élévation d'un exemple de support de l'échangeur de chaleur utilisé dans l'appareil de la figure 1, et

la figure 4 est une vue schématique en coupe selon le plan IV-IV de la figure 1,

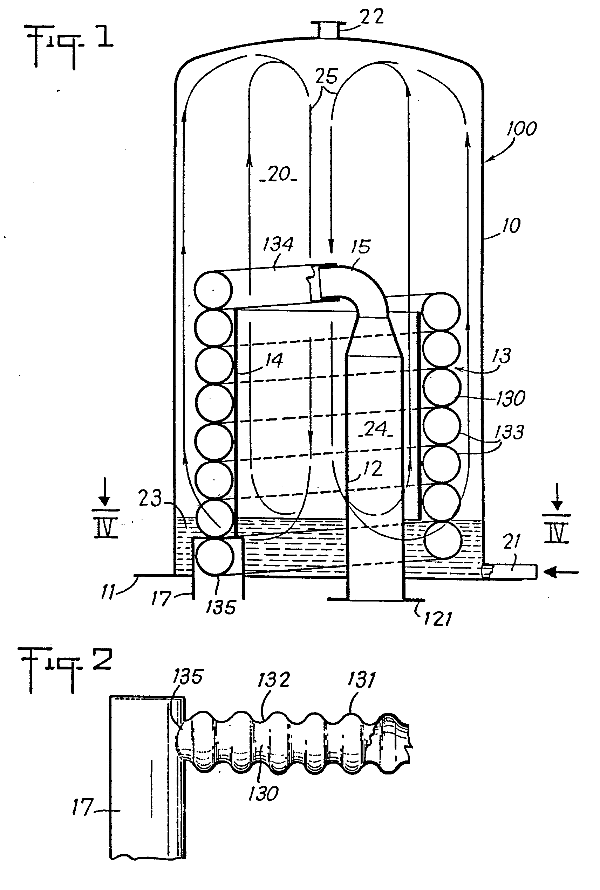

On voit sur la figure 1 un générateur 100 d'eau chaude sanitaire à accumulation et à condensation comprenant une enceinte 10 qui repose sur une base 11.

Un conduit 21 débouche à l'intérieur de l'enceinte 10, à la partie inférieure de celle-ci, pour permettre l'introduction d'eau froide. Un conduit 22 disposé au niveau de la partie supérieure du ballon d'accumulation 100 permet de prélever de l'eau réchauffée, par exemple à une température de l'ordre de 65°C.

Un échangeur de chaleur à contre-courant 13 est disposé à l'intérieur de l'enceinte 10, dans la partie inférieure de celle-ci, en laissant libre dans la partie supérieure de l'enceinte un volume correspondant environ aux deux tiers de la capacité totale de l'enceinte 10.

L'échangeur de chaleur 13 est constitué par un tube annelé souple 130 en acier inoxydable enroulé en hélice dans la zone annulaire du ballon 100 qui est située autour d'une chambre de combustion tubulaire verticale 12. La chambre de combustion tubulaire verticale 12 qui pénètre à l'intérieur de l'enceinte lû est située au-dessus d'un brûleur à gaz, non représenté, qui est alimenté en gaz combustible et en air comburant pour produire des produits de combustion 24 à température élevée qui s'échappent de la chambre de combustion 12, à la partie supérieure de celle-ci, par des conduits de raccordement courbés étanches 15, pour pénétrer à l'extrémité supérieure 134 du tube annelé 130 de l'échangeur 13. L'extrémité inférieure 135 du tube annelé 130 débouche elle-même dans une boîte de fumées 17, qui comprend une buse, non représentée, pour évacuer vers l'extérieur de l'appareil de réchauffage 100, par exemple vers un conduit de cheminée, les fumées refroidies dans l'échangeur 13. Les transferts thermiques se font par convection naturelle au sein de l'eau 20 située dans l'enceinte 10 autour de l'échangeur 13, et par convection forcée au sein des fumées 24 situées dans la chambre de combustion 12 ou l'échangeur 13, les produits gazeux étant mis en mouvement par le ventilateur du brûleur disposé à la partie inférieure de la chambre de combustion 12, à l'entrée de celle-ci. Un ventilateur d'extraction pourrait toutefois être également placé à la sortie de l'échangeur 13, au niveau de la boîte à fumées 17.

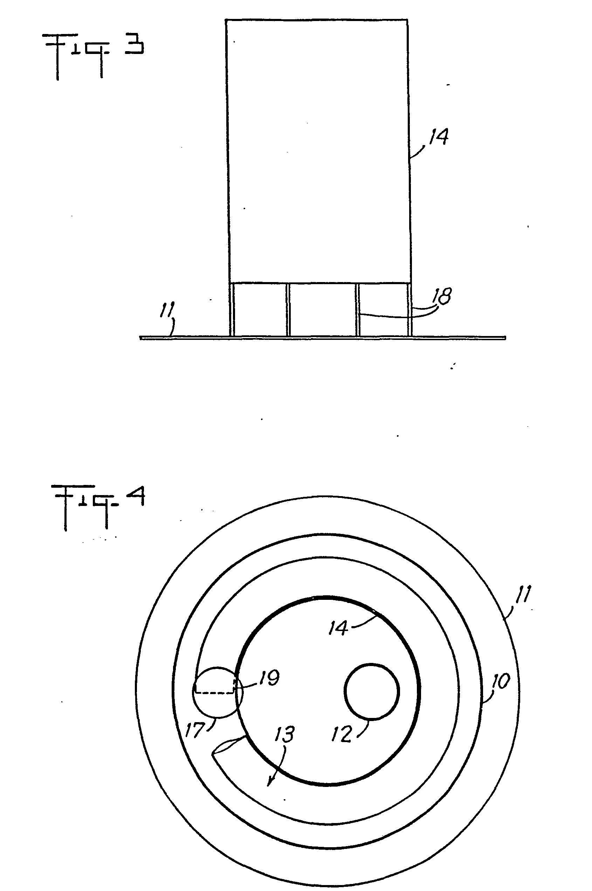

Une particularité de l'invention réside dans la mise en oeuvre d'un échangeur de chaleur 13 constitué par un tube annelé métallique souple 130 dont la paroi présente, vue en coupe axiale (fig.2) une succession de protubérances 131 séparées par des parties en creux 132. Le profil de la paroi du tube annelé 130, vue en coupe axiale, peut ainsi être par exemple de iorme sensiblement sinusoïdale. D'une manière générale, la face interne du tube annelé 130 n'est pas lisse dans le sens longitudinal et présente des irrégularités, protubérances ou aspérités. Du côté des fumées 24, l'échange par convection forcée peut ainsi être important du fait du taux de turbulence élevé créé par l'importante rugosité intérieure du tube annelé et le parcours accidenté du fluide gazeux. Le caractère annelé du tube 130 lui confère en outre une grande souplesse tout en lui conservant une bonne résistance mécanique et en permettant de le disposer de façon compacte. Ainsi, les différentes spires 133 de l'échangeur hélicoïdal 13 peuvent être superposées les unes aux autres et être en contact tangentiellement les unes aux autres. La forme ondulée de la face extérieure du tube annelé 130, dans le sens longitudinal de ce tube, permet de réserver des espaces de circulation du fluide 20 entre deux spires adjacentes 130 et assure ainsi un échange de chaleur important malgré la compacité de l'échangeur 13. Le tube annelé présente une surface d'échange par mètre de tube largement supérieure à celle d'un tube lisse (rapport de 1 à 3 environ).

Le tube annelé 130 peut présenter une relativement faible épaisseur de paroi du fait de la rigidité mécanique apportée par les protubérances 131, ce qui confère une souplesse suffisante pour permettre de conformer en hélice de façon simple, sans procédé de formage, le tube 130. En effet, le tube annelé souple 130 est simplement enroulé autour d'un support rigide 14 constitué par exemple par une paroi cylindrique formant jupe, dont la hauteur correspond au moins approximativement à celle de l'échangeur 13 et qui est fixée, par exemple par l'intermédiaire d'un piètement 18, sur la pièce inférieure 11 formant la base de l'enceinte 10 (fig 1 et 3). Le support cylindrique 14 qui peut être formé par une simple tôle enroulée, est disposé autour de la chambre de combustion 12, qui peut ne pas être coaxiale au support 14 (fig 4). Le tube annelé 130 enroulé autour du support cylindrique 14 se trouve solidarisé, par exemple par soudage, d'une part à la partie supérieure de la chambre de combustion 12 (liaison 15 des fig 1 et 4), d'autre part au voisinage de la base 11 à la boîte à fumées 17 (liaison 19 de la fig 4).

On notera que la structure monobloc constituée par l'échangeur 13, la chambre de combustion 12, la base inférieure 11 et le support 14, permet un montage et un démontage aisés par le bas de l'accumulateur. Une telle solution évite tous les problèmes de percement et de soudage sur la face latérale de l'enceinte 10.

Selon un mode de réalisation particulier, le tube annelé souple 130 est d'abord conformé en hélice autour d'un support tel que le support 14 des figures 1, 3 et 4. On fait ensuite circuler pendant une durée limitée un fluide sous pression tel que de l'eau à l'intérieur du tube annelé 130 afin de provoquer une légère déformation de celui-ci et le rigidifier. Il est alors possible de retirer le support 14, le tube rigidifié 130 pouvant reposer directement de façon stable sur le socle ll.

Comme cela a été indiqué plus haut, l'utilisation d'un tube annelé 130 accroît le coefficient d'échange global par rapport à celui obtenu avec un tube lisse et réduit à surface égale la longueur du tube utilisé. La surface d'échange peut donc être diminuée pour une même puissance à évacuer, ce qui conduit à une diminution de la longueur du tube 130 et du volume mort occupé par l'échangeur 13.

Par ailleurs, la présence d'une tôle 14 enroulée en cylindre à l'intérieur du serpentin 13 ainsi que le ramassement vers le bas de l'échangeur augmentent le volume brassé dans le liquide 20 par les courants de convection (flèches 25 de la fig 1) et accroissent l'homogénéisation et la capacité d'eau soutirable à une température de réchauffage prédéterminée, par exemple 65°C. L'échangeur compact 13 est tout entier disposé à la partie inférieure du ballon d'accumulation 100. Ceci évite toute surchauffe trop importante de l'eau au niveau de la buse 22 de sortie du ballon 100.

Comme on peut le voir sur la figure 1, le circuit de convection 25 ne descend pas jusqu'au point bas de l'enceinte 10 et les spires inférieures de l'échangeur 13 baignent dans de l'eau 23 à une température très largement inférieure à la température de rosée des produits de combustion 24. Cette condition est ainsi idéale pour condenser la vapeur d'eau contenue dans les produits de combustion.

Dans l'enceinte 10, l'existence de la zone inférieure froide 23 et de la zone supérieure chaude située au-dessus de l'échangeur 13 permettent ainsi des échanges thermiques en régime de condensation tout en optimisant la quantité d'eau chaude disponible dans l'accumulateur 100.

A titre d'exemple, avec un échangeur de chaleur 13 constitué par un tube annelé 130 dont la longueur est de 3,10m, le diamètre extérieur maximum est de 50mm, le diamètre intérieur minimum est de 38mm, la profondeur des protubérances 131 est au maximum de 5mm, et qui est conformé en hélice dont les spires présentent un diamètre de 30cm, il est créé une surface totale d'échange de 1,2m$^2$ et la puissance par m$^2$ est de 10,9 kW avec de l'eau froide à 14°C.

Un accumulateur 100 de puissance 12kW contenant un volume utile de 80 litres et destiné à réchauffer de l'eau à 65°C à partir d'une température initiale de l'ordre de 14°C, permet, avec l'échangeur de chaleur précité, de disposer d'une capacité d'eau soutirable à 65°C. qui constitue 80% du volume utile, et offre, avec un débit de 5 litres/mn un rendement global de 109% PCI (pouvoir calorifique inférieur) correspondant à 98% PCS (pouvoir calorifique supérieur).

Bien entendu, diverses modifications et adjonctions peuvent être apportées au mode de réalisation d'appareil de réchauffage qui vient d'être décrit.

En particulier, l'invention s'applique aux accumulateurs d'eau chaude sanitaire, mais également aux chaudières de chauffage central ainsi qu'à divers autres appareils de réchauffage de fluides autres que de l'eau, au moyen d'un échange de chaleur avec des produits de combustion circulant par circulation forcée à l'intérieur d'un échangeur de chaleur constitué par un tube annelé métallique étanche souple ou éventuellement rigidifié par gonflage après enroulement, plongé dans le fluide à réchauffer et définissant une série de boucles ou spires.

**Revendications**

1. Appareil de réchauffage d'un fluide, notamment accumulateur d'eau chaude sanitaire, comprenant une enceinte de chauffage (10) alimentée à sa partie inférieure en fluide à réchauffer, une chambre de combustion (12) comportant un brûleur à l'une de ses extrémités et se prolongeant du côté opposé au brûleur à l'intérieur de l'enceinte (10), un tube de circulation de fumées disposé en hélice à l'intérieur de l'enceinte pour constituer un échangeur de chaleur (13) à contre-courant, lequel tube est raccordé de façon étanche à la sortie de la chambre de combustion (12) et débouche dans un dispositif d'évacuation de fumées (17) situé à la partie inférieure de l'enceinte (10) pour évacuer les fumées à l'extérieur de l'appareil de réchauffage, et des moyens (22) de prélèvement du fluide réchauffé à la partie supérieure de l'enceinte, caractérisé en ce que le tube échangeur de chaleur (13) est constitué par un tube métallique annelé (130) étanche originellement souple, enroulé en hélice autour d'un support rigide (14) et définissant une série de boucles ou spires jointives, ledit tube métallique annelé étant rigidifié dans cette configuration, en ce que le tube annelé (130) est disposé sensiblement dans le tiers inférieur de l'enceinte (10), ledit support rigide (14) étant ouvert à sa partie supérieure et à sa partie inférieure et constitué par une surface cylindrique entourant la partie de la chambre de combustion (12) située à l'intérieur de l'enceinte (10), et en ce que les différentes spires (133) du tube annelé (130) sont tangentiellement en contact les unes avec les autres pour former un échangeur compact.

2. Appareil selon la revendication 1, caractérisé en ce que le tube annelé (130) étanche originellement souple est rigidifié par gonflage après avoir été enroulé en hélice (133).

3. Appareil selon l'une quelconque des revendications 1 et 2, caractérisé en ce que le tube annelé (130) est fixé par soudage d'une part sur la chambre de combustion (12) à la partie supérieure (16) de l'échangeur (13) et d'autre part sur le carter du dispositif évacuateur de fumée (17) à la partie inférieure (19) de l'échangeur (13).

4. Appareil selon l'une quelconque des revendications 1 à 3, caractérisé en ce que l'échangeur de chaleur (13) est du type hélicoïdal à contrecourant, le fluide situé dans l'enceinte échangeant de la chaleur par convection naturelle, et en ce que l'échangeur (13) est situé dans une zone de température du fluide à réchauffer très largement inférieure à la température de rosée des produits de combustion.

5. Appareil selon l'une quelconque des revendications 1 à 4, caractérisé en ce que l'échangeur de chaleur (13) comprend un tube annelé (130) présentant une longueur comprise entre environ 2 et 4 m, un diamètre moyen compris entre environ 30 et 50 mm, une profondeur de cannelure de l'ordre de 5 mm, et un diamètre de spire de l'ordre de 25 à 35 cm.

**Patentansprüche**

1. Heizvorrichtung zum Erwärmen eines Fluids, insbesondere ein Sanitärwarmwasserspeicher, umfassend eine Heizerumhüllung (10), der in ihrem unteren Teil das zu erwärmende Fluid zugeführt wird, eine Verbrennungskammer (12), die an einem ihrer Enden einen Brenner aufweist und sich mit ihrer dem Brenner gegenüberliegenden Ende ins Innere der Umhüllung (10) erstreckt, einem Rauchgasableitrohr, das im Inneren der Umhüllung in Schraubenwindungen verläuft, um einen Gegenstromwärmetauscher (13) zu bilden, wobei das Rohr dicht am Ausgang der Verbrennungskammer (12) angebracht ist und in eine Rauchgasabführeinrichtung (17) mündet, die im unteren Teil der Umhüllung (10) angeordnet ist, um die Rauchgase von der Heizvorrichtung nach außen zu bringen und Mittel (22), um das erwärmte Fluid aus dem oberen Teil der Umhüllung abzuziehen, dadurch gekennzeichnet, daß das Wärmetauscherrohr (13) aus einem dichten, ursprünglich biegsamen, gewellten Metallrohr (130) besteht, das in Schraubwindungen um einen steifen Träger (14) gewickelt ist und eine Anzahl benachbarter Wicklungen oder Schleifen bildet, wobei das metallische gewellte Rohr in dieser Lage versteift wird, sowie dadurch, daß das gewellte Rohr (130) im wesentlichen im unteren Drittel der Umhüllung angebracht ist, daß der steife Träger (14) in seinem oberen Teil offen ist, und daß sein unterer Teil aus einer zylindrischen Oberfläche gebildet wird, die den Teil der Verbrennungskammer (12) umgibt, der im Inneren der Umhüllung (10) liegt, weiters dadurch, daß die verschiedenen Windungen (133) des gewellten Rohres (130) untereinander in tangentiellem Kontakt stehen, um einen kompakten Wärmetauscher zu bilden.

2. Vorrichtung nach Anspruch 1, dadurch gekennzeichnet, daß das dichte, ursprünglich biegsame, gewellte Rohr (130) durch Aufblasen versteift wird, nachdem es in Schraubenwindungen (133) aufgerollt worden ist.

3. Vorrichtung nach einem der Ansprüche 1 und 2, dadurch gekennzeichnet, daß das gewellte Rohr (130) durch löten oder schweißen, einerseits des oberen Teiles (16) des Tauschers (13) an der Verbrennungskammer (12), andererseits des unteren Teiles (19) des Tauschers (13) am Kasten der Rauchgasabzugsvorrichtung (17) befestigt wird.

4. Vorrichtung nach einem der Ansprüche 1 bis 3, dadurch gekennzeichnet, daß der Wärmetauscher (13) vom Gegenstromschraubentyp ist, daß das in der Umhüllung befindliche Fluid die Wärme durch natürliche Konvektion austauscht und dadurch, daß der Tauscher (13) in einer Temperaturzone des zu erwärmenden Fluids angebracht ist, die weit unter dem Taupunkt der Verbrennungsprodukte liegt.

5. Vorrichtung nach einem der Ansprüche 1 bis 4, dadurch gekennzeichnet, daß der Tauscher (13) ein gewelltes Rohr (130) mit einer Länge etwa zwischen 2 und 4 m, mit einem mittleren Durchmesser etwa zwischen 30 und 50 mm, mit einer Wellentiefe von etwa 5 mm und mit einem Windungsdurchmesser der Größenordnung von 25 bis 35 cm ist.

**Claims**

1. Apparatus for heating a fluid, particularly a domestic hot water accumulator, comprising a heating enclosure (10) supplied in its lower part with fluid to be heated, a combustion chamber (12) comprising a burner at one of its ends and extending on the side opposite the burner inside the enclosure (10), a fume circulation tube disposed inside the enclosure to constitute a contraflow heat exchanger (13), which tube is hermetically connected to the outlet of the combustion chamber (12) and opens out in a fume evacuation device (17) located in the lower part of the enclosure (10) in order to evacuate the fumes to outside the heating apparatus, and means (22) for taking heated fluid in the upper part of the enclosure, characterized in that the heat exchanger tube (13) is constituted by an originally flexible, tight, ringed metal tube (130), wound around a rigid support (14) and defining a series of jointed loops or turns, said ringed metal tube being rigidified in this configuration, in that the ringed tube (130) is disposed substantially in the lower third of the enclosure (10), said rigid support (14) being open at its upper part and at its lower part and constituted by a cylindrical surface surrounding the part of the combustion chamber (12) situated inside the enclosure (10), and in that the different turns (133) of the ringed tube (130) are tangentially in contact one with the other in order to form a compact exchanger.

2. Apparatus according to claim 1, characterized in that the originally flexible, tight, ringed tube (130) is rigidified by inflation after having been helically wound (133).

3. Apparatus according to any one of claims 1 and 2, characterized in that the ringed tube (130) is fixed by welding on the one hand on the combustion chamber (12) in the upper part (16) of the exchanger (13) and on the other hand on the housing of the fume evacuator device (17) in the lower part (19) of the exchanger (13).

4. Apparatus according to any one of claims 1 to 3, characterized in that the heat exchanger (13) is of the helicoidal contra-flow type, the fluid in the enclosure exchanging heat by natural convection, and in that the exchanger (13) is located in a temperature zone of the fluid to be heated very largely lower than the dew point temperature of the combustion products.

5. Apparatus according to any one of claims 1 to 4, characterized in that the heat exchanger (13) comprises a ringed tube (130) presenting a length of between about 2 and 4 m, a mean diameter of between about 30 and 50 mm, a depth of fluting of the order of 5 mm, and a turn diameter of the order of 25 to 35 cm.

EP 0 192 506 B1

Fig. 1

22
25
100
20
10
134
15
13
130
133
14
24
12
23
21
11
17
135
121

Fig. 2

135    132    131
17
130
130

1

Fig 3

14

11

18

Fig 4

11

14

19

10

17

13

12